# EUROPEAN PATENT APPLICATION

(11) **EP 2 086 265 A2**
(43) Date of publication of application: **05.08.2009**
(21) Application number: 08167534.0
(22) Date of filing: 24.10.2008
(51) Int. Cl.: H04W 52/02

(54) **Base station apparatus**

(30) Priority: 29.01.2008 JP 2008018264
(71) Applicant: Fujitsu Limited, Kawasaki-shi, Kanagawa 211-8588 (JP)
(72) Inventor: Hasegawa, Hajime, c/o Fujitsu Limited, Kawasaki-shi, Kanagawa 211-8588 (JP)
(74) Representative: Holtby, Christopher Lawrence

(57) **Abstract**

A disclosed base station apparatus used in mobile communication system, where data are transmitted and received using shared channels, includes a signal generating unit for generating a within-range check signal used to determine, after a mobile station apparatus present in a coverage of the base station apparatus has entered into a discontinuous reception mode (DRX) and/or a discontinuous transmission mode (DTX), whether the mobile station apparatus is present in the coverage; a signal transmission control unit for controlling transmission of the within-range check signal so that the within-range check signal is transmitted to the mobile station apparatus upon passage of a predetermined time while the mobile station apparatus remains in the DRX and/or DTX; and a determining unit for determining the presence of the mobile station apparatus in the coverage if response to the within-range check signal is returned, and determine absence from the coverage if no response is returned.

## Description

### CROSS-REFERENCE TO RELATED APPLICATIONS

This application is based upon and claims the benefit of priority of Japanese Patent Application 2008-018264, filed on January 29, 2008, the entire contents of which are hereby incorporated herein by reference.

### FIELD

The disclosures herein are directed to a base station apparatus, a mobile station apparatus, a mobile communication system and a within-range check method.

### BACKGROUND

As for next-generation mobile communication systems, the specifications of which are currently under development, one aim is to provide a wide range of communication services between mobile station apparatuses and network apparatuses. For real-time services, such as voice services and video phone services, regular data transmission and reception is a must due to the nature of the services. On the other hand, for services classified as non-real-time communication, the continuity of data transmission and reception is not necessary. Such non-real-time communication includes Internet access services, such as Web browsing. In non-real-time communications, data are transmitted and received on an as-needed basis, and in the case when data transmission and reception is not needed, the transmitting unit and/or the receiving unit is turned off. Herewith, the power consumption of the mobile station apparatuses and the like can be reduced. The mobile station apparatuses may also be referred to as user equipment (UE).

LTE (Long Term Evolution) is a prospect of the next-generation mobile communication systems described above. For LTE technology also, the specification development has proceeded to have both mobile station apparatuses and base station apparatuses support discontinuous reception (DRX) and/or discontinuous transmission (DTX) in accordance with the need of data reception and/or transmission.
Non-patent Document 1: 3GPP 36.300
Non-patent Document 2: 3GPP 36.311
Non-patent Document 3: 3GPP 36.321

However, the above-mentioned prior art has the following problems.

The next-generation mobile communication systems do not follow the logic of the dedicated channel resource allocation which has been adopted by existing systems, such as W-CDMA (Wideband Code Division Multiple Access). The specification development of the next-generation mobile communication systems has been advanced based on shared channel allocation. Shared channels are common wireless channels allocated to multiple users together. By means of this, limited wireless resources can be used effectively.

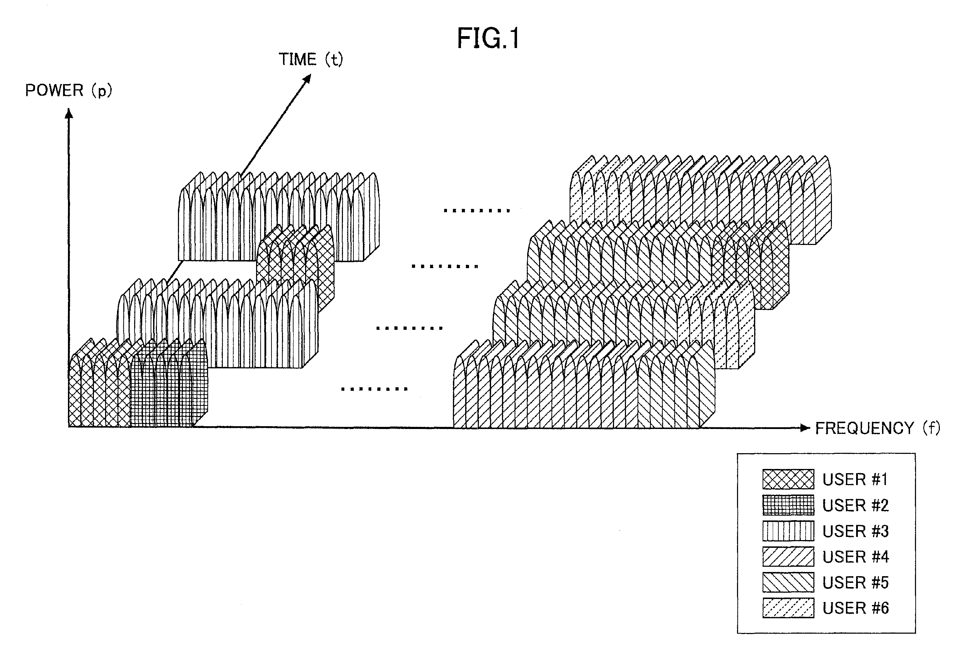

Shared channel allocation is explained next with reference to FIG. 1.

The Orthogonal Frequency Division Multiplexing Access technique (OFDMA) is described here as one example. In an OFDMA-based shared channel allocation, allocation of logical wireless resources to users is not always guaranteed. Therefore, a user may not be able to obtain resources when necessary. Wireless resources include, for example, resource blocks defined by a frequency axis and a time axis. For example, a base station apparatus determines for each mobile station apparatus whether to assign shared channels. In this case, if there are no user data to be transmitted to a mobile station apparatus, the base station apparatus can stop allocating resources to the mobile station apparatus. This mode where resource allocation is under suspension is referred to as a discontinuous reception (DRX) mode.

When a mobile station apparatus in the DRX mode needs to transmit data, the mobile station apparatus transmits a request to transmit user data (i.e. a request for resource allocation). In this way, the mobile station apparatus is able to request shared channels (resources) to be allocated. As a result, the mobile station apparatus is able to resume communications.

However, in the case where the DRX-mode mobile station apparatus having been in the coverage area of a base station apparatus moves out of the coverage area, the base station apparatus is not able to determine whether the mobile station apparatus is not transmitting due to being in the DRX mode or due to a different cause. Cases such that a base station apparatus cannot determine a cause why a DRX-mode mobile station apparatus is not transmitting include when the user of the mobile station apparatus goes into a tunnel while traveling on a train, when the battery of the mobile station apparatus runs out of energy, and when the mobile station apparatus is dropped in water.

In the case where a call (connection) is established between a base station apparatus and a mobile station apparatus, the base station apparatus stores various kinds of information necessary for making a connection with the mobile station apparatus. The base station apparatus keeps the information until the end of communications. If the base station apparatus is not able to determine the cause of not receiving transmissions from the mobile station apparatus, the information of the mobile station apparatus is kept in the base station apparatus even when the mobile station apparatus has moved out from the coverage area of the base station apparatus. This is not preferable from the standpoint of system operation since unnecessary information is kept stored in the base station apparatus. Accordingly, in such a case, it is required to remove the unnecessary information.

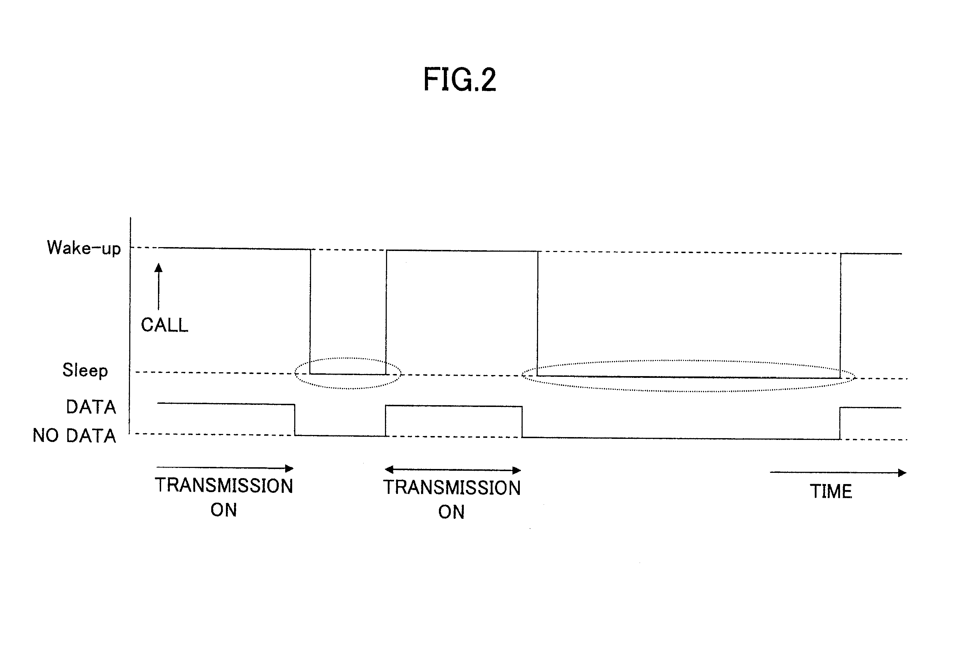

The DRX control is explained next with reference to FIG. 2.

On receiving a signal from a mobile station apparatus, a network establishes a communication connection with the mobile apparatus. Specifically, a communication connection is established between the mobile station apparatus and a base station apparatus. If there are no data to be transmitted through the established connection, the network is able to set the mobile station apparatus in the DRX mode. A DRX cycle includes a sleep period during which data cannot be transmitted and an active (wake-up) period during which data can be transmitted. During the active period, if there are data to be transmitted, the data can be transmitted. For the established connection, resources to be allocated are not located at a fixed position (i.e. not the same resource blocks), and resource allocation is made in accordance with scheduling logic. For example, resources to be allocated may be different with respect to each subframe. The same applies to the case where a connection between a network and a mobile station apparatus is established when the mobile station apparatus receives a signal from the network.

The DRX is also defined in 3GPP (for example, see Non-patent Document 1).

If a mobile station apparatus suddenly moves out of the coverage area of a base station apparatus during its DRX sleep period, the base station apparatus has no means to detect the absence of the mobile station apparatus.

Existing 3G mobile communication systems (hereinafter referred to as "3G systems"), such as W-CDMA mobile communication systems, are free from this problem-i.e. that a base station apparatus cannot detect the presence of a mobile station apparatus when the mobile station apparatus is not transmitting. This problem becomes apparent in the next-generation mobile communication systems.

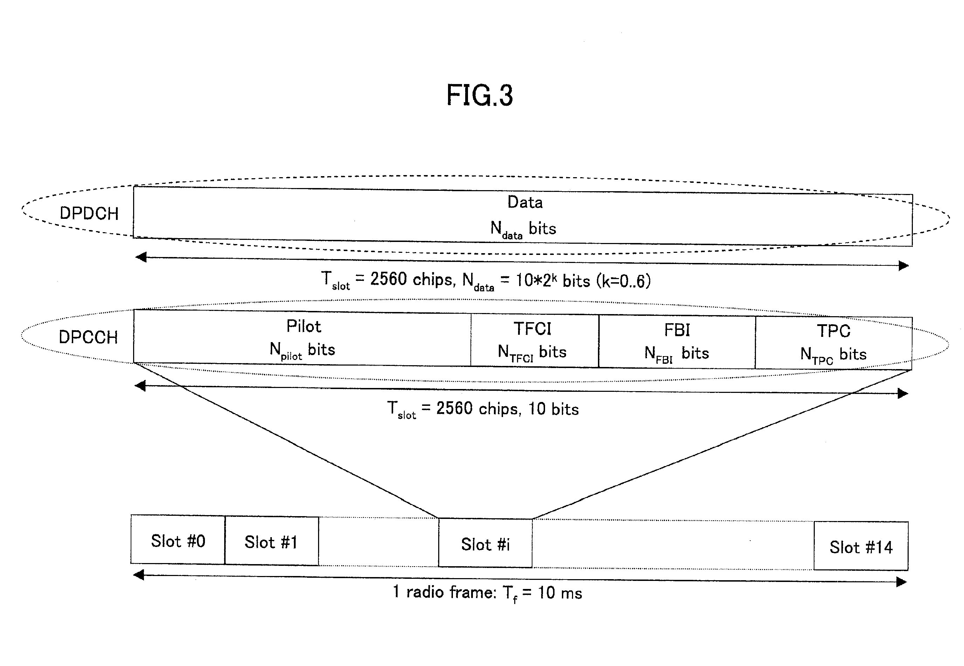

A technique to determine a synchronized status of a DRX-mode mobile station apparatus in the existing 3G systems is explained with reference to FIG. 3.

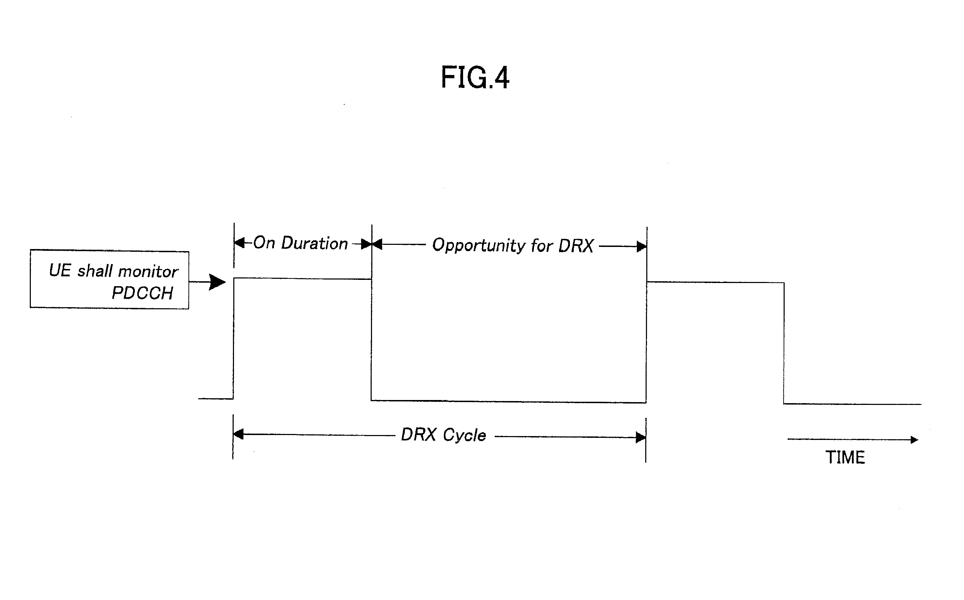

FIG. 3 shows an uplink dedicated physical channel (DPCH) in the 3G systems. The dedicated physical channel includes a dedicated physical data channel (DPDCH) and a dedicated physical control channel (DPCCH). The specifications of the 3G systems detail that the DPDCH and the DPCCH are mapped in an I-frame and a Q-frame, respectively, of the uplink before transmission. However, it is only the DPDCH (I-frame) for which the DRX control is implemented based on whether there are user data to be transmitted. Therefore, even when in the DRX mode, a mobile station apparatus is transmitting the DPCCH all the time. In the DPCCH, an uplink signal used to monitor the synchronization is defined. As a result, even if a mobile station apparatus enters into the DRX mode due to absence of user data to be transmitted, a corresponding base station apparatus is able to monitor the uplink wireless condition of the mobile station apparatus regardless of whether the mobile station apparatus is in the DRX mode. In the DPCCH, the DRX cycle, for example, may also be defined. As illustrated in FIG. 4, one DRX cycle includes a period during which reception (transmission) is permitted (On Duration) and a period during which reception (transmission) is inhibited (Opportunity for DRX). A DRX-mode mobile station apparatus monitors a PDCCH during the period when transmission is permitted (On Duration). This is also true for a mobile station apparatus under the DTX control.

However, the next-generation mobile communication systems adopting a shared channel architecture, such as LTE, use very different techniques to determine a synchronized status of a DRX-mode mobile station apparatus due to the nature of their wireless resource allocation schemes, although the same term "DRX mode" is used in the schemes. A mobile communication system supporting LTE uses, for example, Orthogonal Frequency Division Multiplexing (OFDM) for the downlink and Single-Carrier Frequency Division Multiple Access (SC-FDMA) for the uplink.

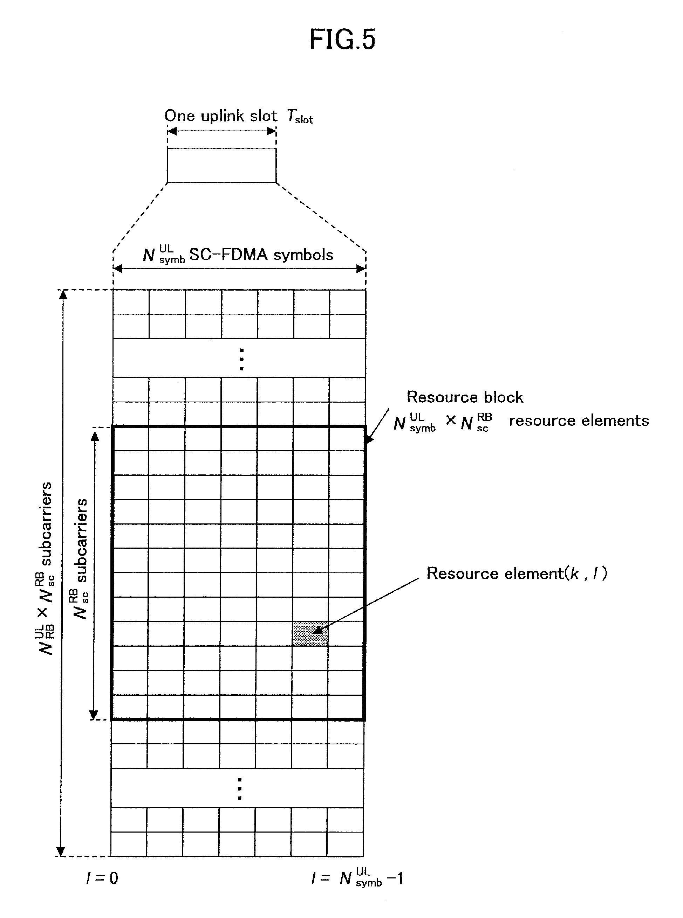

FIG. 5 shows a structure of an uplink resource block (RB) of SC-FDMA adopted as a wireless access scheme in an LTE mobile communication system (for example, see Non-patent Document 2).

As illustrated in FIG. 5, a wireless resource defined by one SC-FDMA symbol and one subcarrier is called a resource element. Information components of an uplink resource block are represented by one or more SC-FDMA symbols (N^{UL}_{symb} in FIG. 5) and one or more sub-carriers (N^{RB}_{sc}). That is to say, a resource block includes multiple resource elements. The number of N^{RB}_{sc} changes depending on guard bits (cyclic prefix) to prevent signal interference between resource blocks, and an applicable frame type and service. N^{UL}_{symb} is bits representing user data. User data to be transmitted are a collection of these bits.

In mobile communication systems adopting a shared channel architecture, such as a LTE mobile communication system, when user data are absent-- i.e. there are no data to be transmitted, transmission of all resource blocks is turned off. Accordingly, a base station apparatus cannot detect an uplink signal at all.

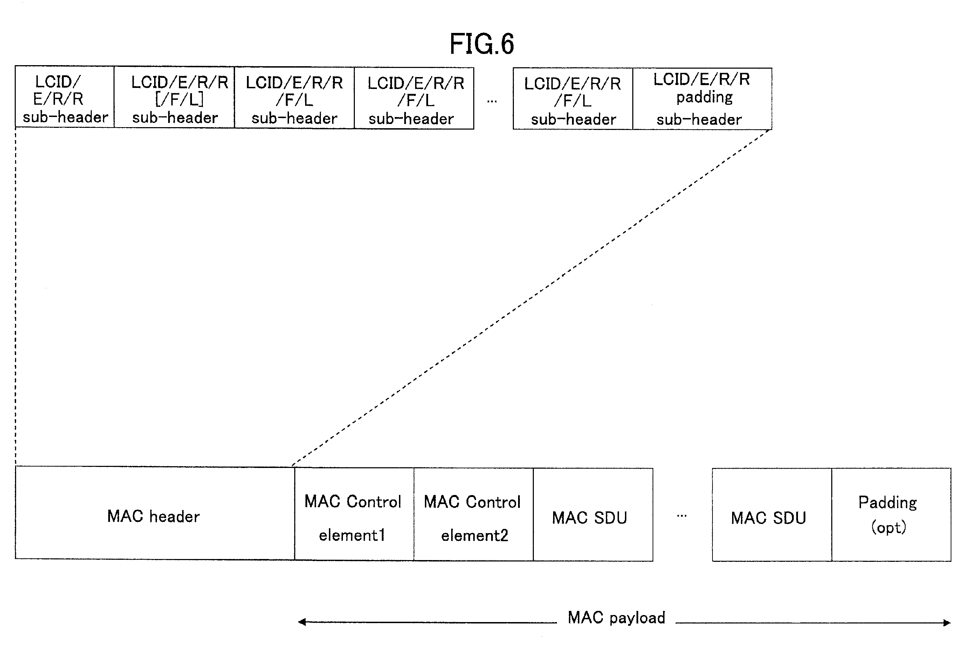

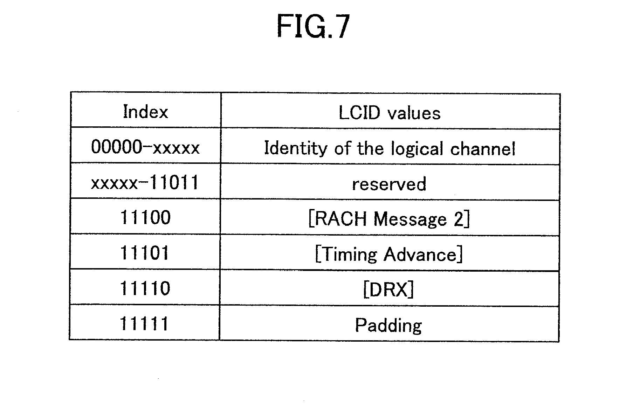

The base station apparatus is able to determine whether an uplink shared channel of a mobile station apparatus operates in the DRX mode. The base station apparatus transmits, for example, MAC (Medium Access Control) PDUs (Protocol Data Units). In a MAC PDU, a LCID identifier is included, as depicted in FIG. 6. In the LCID identifier, DRX can be included, as depicted in FIG. 7. With this MAC PDU, a base station apparatus is able to put a mobile station apparatus into the DRX mode. However, if the DRX-mode mobile station apparatus has moved out of the coverage area of the base station apparatus, the base station apparatus cannot determine whether the mobile station apparatus is not transmitting due to being in the DRX mode or due to having moved out of the coverage area of the base station apparatus. That is, the base station apparatus cannot determine whether the mobile station apparatus is present in or absent from the coverage area of the base station apparatus. If the mobile station apparatus is absent from the coverage area, the base station apparatus can release the resources which have been allocated for the mobile station apparatus. However, because not being able to determine the presence/absence of the mobile station apparatus, the base station apparatus needs to keep obtained context (various kinds of information) of the mobile station apparatus. Such context includes resource information. Accordingly, providing unnecessary memory buffer may need to be considered, which is not desirable from the viewpoint of the design of a base station apparatus.

### SUMMARY

According to an aspect of the present disclosure, a base station apparatus used in a mobile communication system, in which data are transmitted and received using shared channels, includes a signal generating unit configured to generate a within-range check signal used to determine, after a mobile station apparatus present in a coverage area of the base station apparatus has entered into discontinuous reception mode and/or discontinuous transmission mode, presence of the mobile station apparatus in the coverage area; a signal transmission control unit configured to control transmission of the within-range check signal so that the within-range check signal is transmitted to the mobile station apparatus upon a passage of a predetermined transmission time while the mobile station apparatus remains in the discontinuous reception mode and/or discontinuous transmission mode; and a determining unit configured to determine the presence of the mobile station apparatus in the coverage area if a response to the within-range check signal is returned, and determine the absence of the mobile station apparatus from the coverage area if no response to the within-range check signal is returned.

According to another aspect of the present disclosure, a base station apparatus used in a mobile communication system, in which data are transmitted and received between the base station apparatus and a mobile station apparatus using shared channels, includes a determining unit configured to determine, in the case of receiving a within-range report signal from the mobile station apparatus in discontinuous reception mode and/or discontinuous transmission mode, presence of the mobile station apparatus in a coverage area of the base station apparatus; a response signal generating unit configured to generate a response signal in response to the within-range report signal; and a response signal transmission control unit configured to control transmission of the response signal.

According to another aspect of the present disclosure, a mobile station apparatus used in a mobile communication system, in which data are transmitted and received between the mobile station apparatus and a base station apparatus using shared channels after call establishment, includes a report signal generating unit configured to generate a within-range report signal indicating presence of the mobile station apparatus in a coverage area of the base station apparatus; and a report signal transmission control unit configured to control transmission of the within-range report signal to transmit the within-range report signal to the base station apparatus at a predetermined interval while the mobile station apparatus in discontinuous reception mode and/or discontinuous transmission mode.

According to another aspect of the present disclosure, a mobile communication system, in which data are transmitted and received using shared channels, includes a mobile station apparatus; and a base station apparatus. The base station apparatus includes a signal generating unit configured to generate a within-range check signal used to check, after the mobile station apparatus present in a coverage area of the base station apparatus has entered into discontinuous reception mode and/or discontinuous transmission mode, the presence of the mobile station apparatus in the coverage area; a signal transmission control unit configured to control transmission of the within-range check signal so that the within-range check signal is transmitted to the mobile station apparatus upon a passage of a predetermined transmission time while the mobile station apparatus remains in the discontinuous reception mode and/or discontinuous transmission mode; and a determining unit configured to determine presence of the mobile station apparatus in the coverage area if a response to the within-range check signal is returned, and determine absence of the mobile station apparatus from the coverage area if no response to the within-range check signal is returned.

According to another aspect of the present disclosure, a mobile communication system in which data are transmitted and received using shared channels includes a mobile station apparatus; and a base station apparatus. The mobile station apparatus includes a report signal generating unit configured to generate a within-range report signal indicating presence of the mobile station apparatus in a coverage area of the base station; and a report signal transmission control unit configured to control transmission of the within-range report signal to transmit the within-range report signal to the base station apparatus at a predetermined interval. The base station apparatus includes a determining unit configured to determine, in a case of receiving the within-range report signal from the mobile station apparatus in discontinuous reception mode and/or discontinuous transmission mode, the presence of the mobile station apparatus in the coverage area; a response signal generating unit configured to generate a response signal in response to the within-range report signal; and a response signal transmission control unit configured to control transmission of the response signal.

According to another aspect of the present disclosure, a within-range check method is used in a mobile communication system in which data are transmitted and received between a mobile station apparatus and a base station apparatus using shared channels. The within-range check method causes the base station apparatus to execute the steps of generating a within-range check signal used to check, after a mobile station apparatus present in a coverage area of the base station apparatus has entered into discontinuous reception mode and/or discontinuous transmission mode, the presence of the mobile station apparatus in the coverage area; controlling transmission of the within-range check signal so that the within-range check signal is transmitted to the mobile station apparatus upon a passage of a predetermined transmission time while the mobile station apparatus remains in the discontinuous reception mode and/or discontinuous transmission mode; and determining the presence of the mobile station apparatus in the coverage area if a response to the within-range check signal is returned, and determining the absence of the mobile station apparatus from the coverage area if no response to the within-range check signal is returned.

According to another aspect of the present disclosure, a within-range check method is used in a mobile communication system in which data are transmitted and received between a mobile station apparatus and a base station apparatus using shared channels. The within-range check method includes the steps of causing the mobile station apparatus to generate a within-range report signal indicating the presence of the mobile station apparatus in a coverage area of the base station apparatus; causing the mobile station apparatus to transmit the within-range report signal to the base station apparatus at a predetermined interval while the mobile station apparatus is in a discontinuous reception mode and/or a discontinuous transmission mode; causing the base station apparatus to determine, in a case of receiving the within-range report signal from the mobile station apparatus in the discontinuous reception mode and/or the discontinuous transmission mode, the presence of the mobile station apparatus in the coverage area; causing the base station apparatus to generate a response signal in response to the within-range report signal; and causing the base station apparatus to transmit the response signal to the mobile station apparatus.

### BRIEF DESCRIPTION OF DRAWINGS

FIG. 1 illustrates shared channel allocation;
FIG. 2 illustrates discontinuous reception;
FIG. 3 illustrates an uplink channel related to synchronization monitoring and an uplink channel related to discontinuous reception;
FIG. 4 illustrates a discontinuous reception cycle;
FIG. 5 illustrates an uplink resource block;
FIG. 6 illustrates a structural example of a MAC PDU;
FIG. 7 illustrates an example of LCID information;
FIG. 8 illustrates an exemplary structure of a mobile communication system according to an embodiment of the present disclosure;
FIG. 9 is a partial block diagram showing a mobile station apparatus according to an embodiment of the present disclosure;
FIG. 10 is a partial block diagram showing a base station apparatus according to an embodiment of the present disclosure;
FIG. 11 is a flowchart of one example showing a connection establishment procedure of the mobile communication system according to an embodiment of the present disclosure;
FIG. 12 is a flowchart of one example showing a process performed by the mobile communication system according to an embodiment of the present disclosure;
FIG. 13 is a flowchart of one example showing a process performed by the mobile communication system according to an embodiment of the present disclosure;
FIG. 14 is a flowchart of one example showing a process performed by the mobile communication system according to an embodiment of the present disclosure;
FIG. 15 is a flowchart of one example showing a process performed by the mobile communication system according to an embodiment of the present disclosure; and
FIG. 16 is a flowchart of one example showing a process performed by the mobile communication system according to an embodiment of the present disclosure.

### DESCRIPTION OF EMBODIMENT

Embodiments that describe best modes for carrying out the present disclosures are explained next with reference to the drawings.

Note that, in all drawings used to describe the embodiments, the same reference numerals are given to the components having identical functions, and their descriptions are not repeated.

### (a) First Embodiment

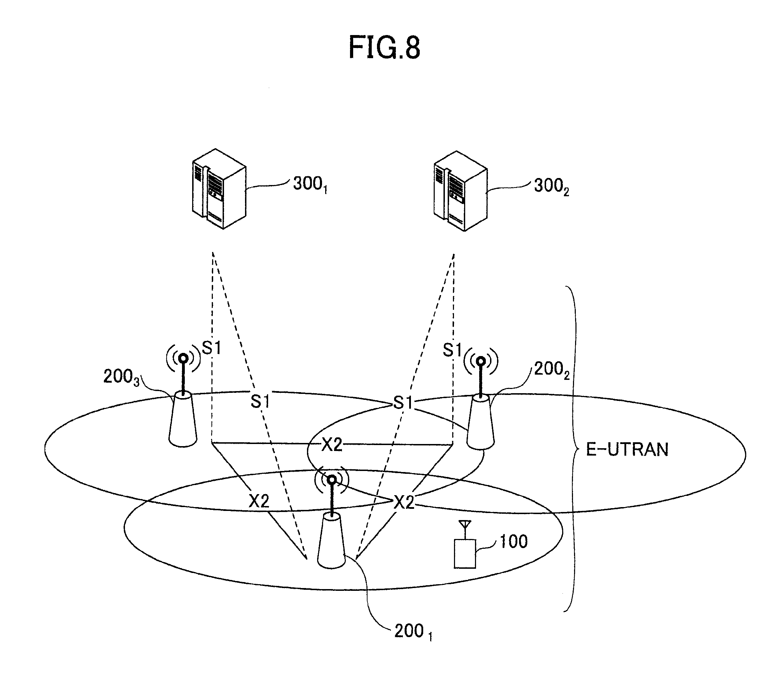

According to an embodiment of the present disclosure, one example of a mobile communication system including a base station apparatus and a mobile station apparatus is explained with reference to FIG. 8.

The mobile communication system according to the present embodiment transmits user data using shared channels. Alternatively, the mobile communication system may transmit user data using common channels. Furthermore, the mobile communication system may transmit user data using both shared channels and common channels. In the mobile communication system according to the present embodiment, the mobile station apparatus is able to enter into a discontinuous reception (DRX) mode in order to reduce power consumption. The mobile station apparatus may enter into a discontinuous transmission (DTX) mode. One example of mobile communication systems having such characteristics is a LTE (Long Term Evolution) mobile communication system. In the present embodiment, a LTE mobile communication system is described by way of example; however, the present embodiment may be applied to mobile communication systems other then those supporting LTE, provided that the mobile communication systems have the above-mentioned characteristics. For example, the present embodiment may be applied to WiMAX (Worldwide Interoperability for Microwave Access) or WLAN (Wireless LAN) mobile communication systems. A LTE mobile communication system may also referred to as "Evolved UTRA and UTRAN".

The mobile communication system according to the present embodiment includes one or more mobile station apparatuses (User Equipment, UE) 100 and one or more base station apparatuses (eNode B, eNB) 200 (200₁, 200₂ and 200₃ in FIG. 8). Note that where differentiation is not required, the "mobile station apparatus 100" and "base station apparatus 200" are used for one or more of the mobile station apparatuses and one or more of the base station apparatuses, respectively. The mobile communication system also includes MME/S-GWs (Mobility Management Entities/Serving-Gateway) 300 (300₁ and 300₂ in FIG. 8) superordinate to the base station apparatuses 200.

In FIG. 8, reference numeral S1 represents an interface between a base station apparatus 100 and a MME/S-GW 300, and a reference numeral X2 is an interface between base station apparatuses 200.

The base station apparatuses 200 perform call-control operations and wireless-control operations. The base station apparatuses 200 also have a RRC (Radio Resource Control) function. The base station apparatuses 200 include S1-AP (Application) and X2-AP.

The MME/S-GWs 300 terminate NAS (Non-Access Stratum) signaling security, and manages mobile station apparatuses in the idle mode and SAE (System Architecture Evolution) bearer resources.

The mobile communication system uses, as wireless access schemes, OFDM for the downlink and SC-FDMA for the uplink. OFDM is a scheme in which a frequency range is divided into multiple narrow frequency bands (sub-carriers) and data are transmitted in each frequency band. SC-FDMA is a transmission scheme capable of reducing interference between terminals by dividing a frequency range and having multiple terminals transmit in different frequency bands.

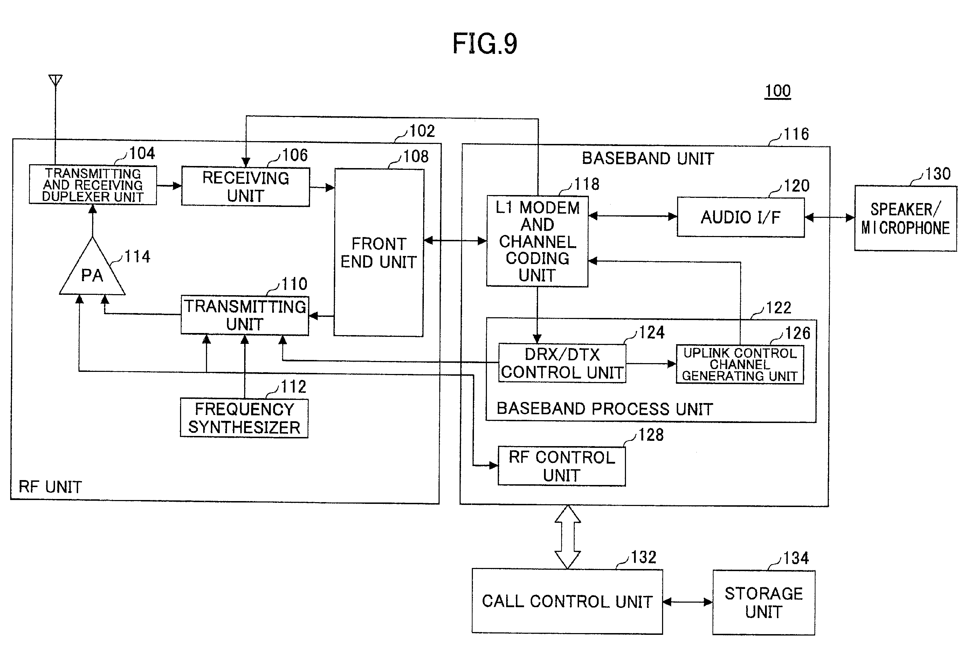

The mobile station apparatus 100 according to the present embodiment is described with reference to FIG. 9.

The mobile station apparatus 100 includes an RF (Radio Frequency) unit 102 configured to convert a signal received by an antenna into a baseband signal and input the baseband signal to a baseband unit 116 described below. The RF unit 102 also up-converts an IF signal having an intermediate frequency input from the baseband unit 116 into an RF signal, and amplifies and transmits the RF signal.

The following describes the RF unit 102 in specific terms.

The RF unit 102 includes a transmitting and receiving duplexer unit 104; a receiving unit 106; a front end unit 108; a transmitting unit 110; a frequency synthesizer 112; and a power amplifier 114. The transmitting and receiving duplexer unit 104 transmits, from the antenna, a signal input from the power amplifier 114 described below. The transmitting and receiving duplexer unit 104 also inputs a signal from the antenna into the receiving unit 106 described below.

The receiving unit 106 performs a receiving process of a signal input from the transmitting and receiving duplexer unit 104. The front end unit 108 converts a signal input from the receiving unit 106 into a digital signal, and converts a signal input from the baseband unit 116 into an analog signal. The transmitting unit 110 up-converts an intermediate frequency signal input from the front end unit 108 to a wireless frequency specified by the baseband unit 116. The frequency synthesizer 112 oscillates and thereby generates the frequency used by the transmitting unit 110 to up-convert the signal. The power amplifier 114 amplifies the signal input from the transmitting unit 110 under the control of the baseband unit 116.

The mobile station apparatus 100 further includes the baseband unit 116 configured to convert a digital signal input from the RF unit 102 into an audio signal and output the audio signal to a speaker/microphone 130 described below. The baseband unit 116 also converts an audio signal input from the speaker/microphone 130 into digital data and inputs the digital data into the RF unit 102. Furthermore, the baseband unit 116 performs the DRX control and/or DTX control.

The following describes the baseband unit 116 in specific terms.

The baseband unit 116 includes an L1 modem and channel coding unit 118; an audio I/F 120; a baseband process unit 122; and an RF control unit 128. The L1 modem and channel coding unit 118 converts a digital signal input from the front end unit 108 into an audio signal and outputs the converted audio signal to the speaker/microphone 130 via the audio I/F 120 described below. The L1 modem and channel coding unit 118 encodes audio input from the speaker/microphone 130 and inputs the encoded audio into the front end unit 108. The audio I/F 120 is an interface between the L1 modem and channel coding unit 118 and the speaker/microphone 130. The baseband process unit 122 controls the DRX mode and/or the DTX mode of the mobile station apparatus 100. The baseband process unit 122 also performs a response process after receiving a within-range check signal from a base station apparatus 200 while the mobile station apparatus 100 is in the DRX mode and/or the DTX mode. The within-range check signal is transmitted for determining whether the mobile station apparatus 100 is within the coverage area of the base station apparatus 200. For example, when a control signal serving as a within-range check signal is transmitted from a base station apparatus 200, the baseband process unit 122 generates a response signal to the control signal, and controls transmission of the generated response signal. The control signal includes an L1/L2 control channel, for example. Also, when the mobile station apparatus 100 is in the DRX mode and/or the DTX mode and has continued not to transmit or receive a signal to/from a base station apparatus 200, the baseband process unit 122 transmits a within-range report signal at a predetermined interval to a base station apparatus 200 with which the mobile station apparatus 100 has established the most recent connection (hereinafter referred to as "base station apparatus 200 in communication"). The within-range report signal is transmitted to notify the base station apparatus 200 that the mobile station apparatus 100 is present in the coverage area of the base station apparatus 200. That is, the within-range check signal and/or within-range report signal is transmitted in the case where the mobile station apparatus 100 is in the DRX mode and/or the DTX mode and has continued not to transmit or receive a signal to/from a base station apparatus 200. The case where a mobile station apparatus 100 is in the DRX mode and/or the DTX mode is, for example, when a base station apparatus 200 in communication is aware that the mobile station apparatus 100 is in the DRX mode and/or the DTX mode, or when the mobile station apparatus 100 itself is aware of being in the DRX mode and/or the DTX mode. The predetermined interval is a period of time based on which the base station apparatus 200 assumes the presence of the mobile station apparatus 100 within its coverage area when the mobile station apparatus 100 remains in the DRX mode and/or the DTX mode and has continued not to transmit or receive a signal to/from the base station apparatus 200. For example, the predetermined interval is preferably a period of time exceeding one DRX cycle described with reference to FIG. 4. From the viewpoint of decreasing the number of transmissions of a within-range report signal, it is preferable that the predetermined interval be sufficiently longer than one DRX cycle. Alternatively, the predetermined interval may be determined by a base station apparatus 200 in communication. For example, the predetermined interval may be determined based on a type or the performance of the mobile station apparatus 100.

The baseband process unit 122 is explained next in specific terms. The baseband process unit 122 includes a DRX/DTX control unit 124 and an uplink control channel generating unit 126.
The DRX/DTX control unit 124 puts the mobile station apparatus 100 into the DRX mode when the mobile station apparatus 100 has not received data for a predetermined period of time. For example, the DRX/DTX control unit 124 reduces the frequency of data reception by controlling the receiving unit 106. The DRX/DTX control unit 124 may also put the mobile station apparatus 100 into the DTX mode when the mobile station apparatus 100 has not transmitted data for a predetermined period of time. For example, the DRX/DTX control unit 124 reduces the frequency of data transmission by controlling the transmitting unit 110. In this case, the DRX/DTX control unit 124 may notify a base station apparatus 200 in communication that the mobile station apparatus 100 has entered into the DRX mode. The DRX/DTX control unit 124 may notify the base station apparatus 200 that the mobile station apparatus 100 has entered into the DTX mode. Herewith, the wireless resources can be used more efficiently and the battery power consumption of the mobile station apparatus 100 can be reduced. The DRX/DTX control unit 124 may put the mobile station apparatus 100 into the DRX mode according to a signal transmitted from a base station apparatus 200 in communication and including an instruction to put the mobile station apparatus 100 into the DRX mode. Such a signal may be a MAC PDU including an instruction to put the mobile station apparatus 100 into the DRX mode. Also, the DRX/DTX control unit 124 may put the mobile station apparatus 100 into the DTX mode according to a signal transmitted from a base station apparatus 200 in communication and including an instruction to put the mobile station apparatus 100 into the DTX mode. In addition, if the mobile station apparatus 100 receives a within-range check signal from a base station apparatus 200 in communication while the mobile station apparatus 100 is in the DRX mode and/or the DTX mode, the DRX/DTX control unit 124 controls transmission of a signal in response to the within-range check signal. In addition, when the mobile station apparatus 100 is in the DRX mode and/or the DTX mode, the DRX/DTX control unit 124 controls transmitting a within-range check signal to a base station apparatus 200 in communication at a predetermined interval. As described above, the within-range check signal and/or within-range report signal is transmitted in the case where the mobile station apparatus 100 is in the DRX mode and/or the DTX mode and has continued not to transmit or receive a signal to/from a base station apparatus 200 in communication.

The uplink control channel generating unit 126 of the baseband process unit 122 generates a response signal after a within-range check signal is received from a base station apparatus 200 in communication while the mobile station apparatus 100 is in the DRX mode. The uplink control channel generating unit 126 may generate a response signal after a within-range check signal is received from a base station apparatus 200 in communication while the mobile station apparatus 100 is in the DTX mode. In addition, the uplink control channel generating unit 126 generates a within-range report signal at a predetermined interval when the mobile station apparatus 100 is in the DRX mode and has continued not to transmit or receive a signal to/from a base station apparatus 200 in communication. Also, the uplink control channel generation unit 126 may generate a within-range report signal at a predetermined interval in the case where the mobile station apparatus 100 is in the DTX mode and has continued not to transmit or receive a signal to/from a base station apparatus 200 in communication. For example, when a control signal serving as a within-range check signal is transmitted from the base station apparatus 200, the uplink control channel generation unit 126 generates a signal in response to the control signal. The control signal includes an L1/L2 control channel, for example.

The RF control unit 128 of the baseband unit 116 controls the RF unit 102. Specifically, the RF control unit 128 controls the transmitting unit 110 and the power amplifier 114.

The mobile station apparatus 100 according to the present embodiment also includes the speaker/microphone 130 configured to input voice from the user and/or sound into the baseband unit 116, and output voice and/or sound from the baseband unit 116.

The mobile station apparatus 100 also includes a call control unit 132 configured to perform a call process with a base station apparatus 200. The call control unit 132 also manages wireless channels, communication quality and mobility.

The mobile station apparatus 100 also includes a storage unit 134 configured to store wireless channel, communication quality and mobility information managed by the call control unit 132. The storage unit 134 stores, for example, a global ID of the mobile station apparatus 100, such as an IMSI (International Mobile Subscriber Identifier) or a TMSI (Temporary Mobile Subscriber Identity). The storage unit 134 also stores information of a current tracking area (TA) of the mobile station apparatus 100 when a call is established. Also, if a call is established, the storage unit 134 stores a C-RNTI (Cell specific-Radio Network Temporary ID) assigned by a base station apparatus 200 in communication. Alternatively, the storage unit 134 may store an IP address assigned to the mobile station apparatus 100 if a call is established.

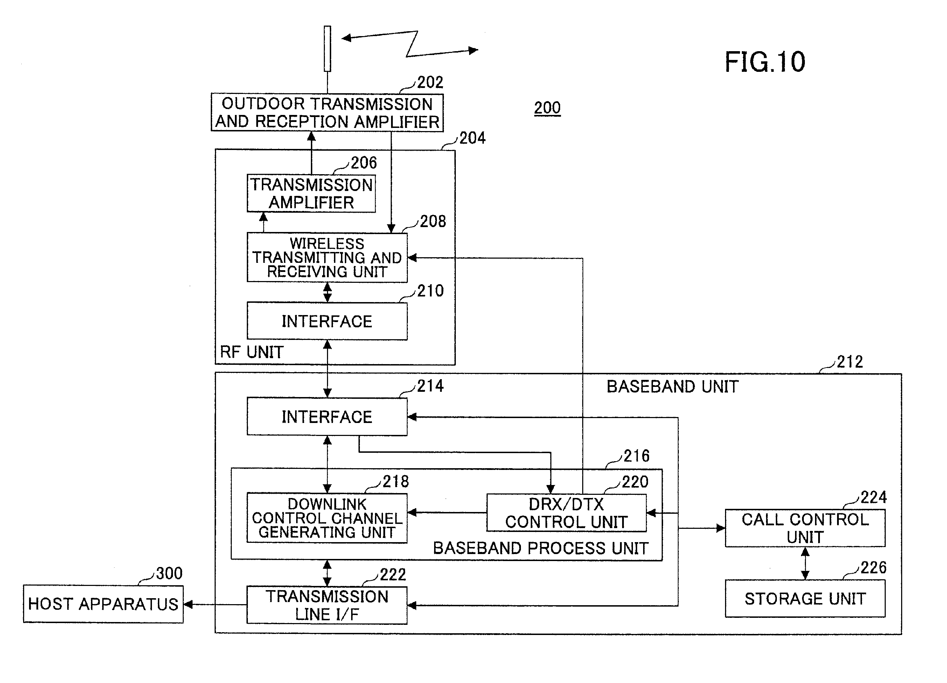

The base station apparatus 200 according to the present embodiment is explained with reference to FIG. 10.

In LTE having a very different system architecture compared to W-CDMA, some functions of a radio network controller (RNC) included in W-CDMA systems are placed in the base station apparatuses 200. The base station apparatus 200 has call-process control functions, such as a function of managing wireless resources.

The base station apparatus 200 according to the present embodiment has an outdoor transmission and reception amplifier 202 configured to amplify a signal received by an antenna and input the amplified signal to an RF unit 204 described below.

The base station apparatus 200 also includes an RF unit 204 configured to convert a signal input from the outdoor transmission and reception amplifier 202 into a baseband signal and input the baseband signal into a baseband unit 212 described below. The RF unit 204 also up-converts an IF signal having an intermediate frequency input from the baseband unit 212 into an RF signal, and amplifies and transmits the RF signal.

The following describes the RF unit 204 in specific terms. The RF unit 204 includes a wireless transmitting and receiving unit 208; a transmission amplifier 206; and an interface 210. The wireless transmitting and receiving unit 208 converts a signal input from the baseband unit 212 into an analog signal, and up-converts the analog signal into an RF signal and then inputs the RF signal into the transmission amplifier 206. The wireless transmitting and receiving unit 208 also converts a signal input from the outdoor transmission and reception amplifier 202 into a baseband signal and inputs the baseband signal into the baseband unit 212. The transmission amplifier 206 amplifies and transmits a signal input from the wireless transmitting and receiving unit 208. The interface 210 is an interface with the baseband unit 212.

The base station apparatus 200 also includes the baseband unit 212 configured to control a call with a mobile station apparatus 100. The baseband unit 212 also monitors one or more DRX-mode mobile station apparatuses 100 present in the coverage area of the base station apparatus 200. The baseband unit 212 may also monitor a mobile station apparatus 100 in the DTX mode.

The following describes the baseband unit 212 in specific terms. The baseband unit 212 includes an interface 214; a baseband process unit 216; a transmission line I/F 222; a call control unit 224; and a storage unit 226. The interface 214 serves as an interface with the RF unit 204.

The baseband process unit 216 of the baseband unit 212 monitors one or more DRX-mode mobile station apparatuses 100 in the coverage area of the base station apparatus 200. For example, the band process unit 216 monitors whether, among mobile station apparatuses 100 present in the coverage area of the base station apparatus 200, one or more DRX-mode mobile station apparatuses remain within the coverage area by transmitting a within-range check signal at a predetermined interval. In the case of determining that a DRX-mode mobile station apparatus 100 is absent from the coverage area, the baseband process unit 216 directs the call control unit 224 described below to remove stored resource information of this mobile station apparatus 100. The resource information includes parameters, which include ID information and line information necessary for a line connection. For example, the ID information may include an IMSI. The line information may include at least one of an ID of the tracking area, a C-RNTI and an IP address of the mobile station apparatus 100. As a result, the resources are released from a resource buffer of the base station apparatus 200.

The baseband process unit 216 may monitor one or more DTX-mode mobile station apparatuses 100 present in the coverage area of the base station apparatus 200. For example, the band process unit 216 monitors whether, among mobile station apparatuses 100 present in the coverage area of the base station apparatus 200, one or more DTX-mode mobile station apparatuses remain within the coverage area by transmitting a within-range check signal at a predetermined interval. In the case of determining that a DTX-mode mobile station apparatus 100 is absent from the coverage area, the baseband process unit 216 directs the call control unit 224 to remove stored resource information of this mobile station apparatus 100. As a result, the resources are released from a resource buffer of the base station apparatus 200.

The predetermined interval is a period of time during which the possible presence of a DRX-mode/DTX-mode mobile station apparatus 100 is determined by carrying out a within-range check. For example, the predetermined interval is preferably a period of time exceeding one DRX cycle described with reference to FIG. 4. From the viewpoint of decreasing the number of transmissions of a within-range check signal, it is preferable that the predetermined interval be sufficiently longer than one DRX cycle. Alternatively, the predetermined interval may be determined with respect to each mobile station apparatus 100. For example, the predetermined interval may be determined based on the type of the mobile station apparatus 100. Alternatively, the predetermined interval may be determined based on the type or the performance of the mobile station apparatus 100.

The baseband process unit 216 is explained next in specific terms.

The baseband process unit 216 includes a DRX/DTX control unit 220 configured to perform the DRX control and/or the DTX control by controlling transmitting and receiving operations of the wireless transmitting and receiving unit 208. The DRX/DTX control unit 220 also transmits, to a mobile station apparatus 100 to which there are no data to be transmitted, a signal including an instruction to put the mobile station apparatus 100 into the DRX mode. Alternatively, the DRX/DTX control unit 220 may learn that a mobile station apparatus 100 has entered into the DRX mode, by receiving a notice indicating accordingly from the mobile station apparatus 100.

The DRX/DTX control unit 220 may also transmit, to a mobile station apparatus 100 from which no data have been received, a signal including an instruction to put the mobile station apparatus 100 into the DTX mode. For example, the DRX/DTX control unit 220 may transmit a signal including such an instruction to a mobile station apparatus 100 which has not made a request for resource allocation. Alternatively, the DRX/DTX control unit 220 may learn that a mobile station apparatus 100 has entered into the DTX mode, by receiving a notice indicating accordingly from the mobile station apparatus 100.

If a DRX-mode mobile station apparatus 100 is present in the coverage area of the base station apparatus 200, the DRX/DTX control unit 220 directs, at a predetermined interval, a downlink control channel generating unit 218 described below to transmit a within-range check signal to the mobile station apparatus 100. Also if a DTX-mode mobile station apparatus 100 is present in the coverage area of the base station apparatus 200, the DRX/DTX control unit 220 may direct, at a predetermined interval, the downlink control channel generating unit 218 to transmit a within-range check signal to the mobile station apparatus 100. If there is no response from a mobile station apparatus 100 to which a within-range check signal has been transmitted, the DRX/DTX control unit 220 directs the call control unit 224 to remove stored resource information of the mobile station apparatus 100. If there is a response from a mobile station apparatus to which a within-range check signal has been transmitted, the DRX/DTX control unit 220 determines that the mobile station apparatus 100 is present in the coverage area of the base station apparatus 200. In this case, the call control unit 224 determines that the mobile station apparatus 100 can be pulled into synchronization.

If a within-range report signal is transmitted from a DRX-mode mobile station apparatus 100 within the coverage area of the base station apparatus 200, the DRX/DTX control unit 220 directs the downlink control channel generating unit 218 to transmit a signal in response to the within-range report signal. Also, if a within-range report signal is transmitted from a DTX-mode mobile station apparatus 100 within the coverage area of the base station apparatus 200, the DRX/DTX control unit 220 may direct the downlink control channel generating unit 218 to transmit a signal in response to the within-range report signal.

The baseband process unit 216 also includes the downlink control channel generation unit 218 configured to generate a within-range check signal in accordance with a direction by the DRX/DTX control unit 220. The within-range check signal is transmitted via the RF unit 204 at a predetermined interval to a mobile station apparatus 100 identified by the base station apparatus 200 to be in the DRX mode. The within-range check signal may be transmitted via the RF unit 204 at a predetermined interval to a mobile station apparatus 100 identified by the base station apparatus 200 to be in the DTX mode. The baseband process unit 216 may generate a control channel, for example, as the within-range check signal. The control channel may include an L1/L2 control channel, which may include timing advance (TA). Also, when directed by the DRX/DTX control unit 220, the downlink control channel generating unit 218 generates and transmits a signal in response to a within-range report signal.

The transmission line I/F 222 of the baseband process unit 220 serves as an interface with a host apparatus 300. The host apparatus 300 may include a MME/S-GW, as described above.

The call control unit 224 of the baseband unit 212 performs a call process with a mobile station apparatus 100. The call control unit 224 manages the wireless resources. The call control unit 224 also stores in the storage unit 226 resource information of one or more mobile station apparatuses 100 with each of which a call process has been performed. In accordance with a direction from the DRX/DTX control unit 124, the call control unit 224 removes, from the storage unit 226, stored resource information of a mobile station apparatus 100 which does not transmit a response to a within-range check signal. Herewith, it is possible to release resources being held for a mobile station apparatus 100 not transmitting a response to a within-range check signal. The control unit 224 generates interface messages to be sent to various network access points, such as a target base station apparatus (Target eNode-B) 200 and a MME/S-Gateway. If the call control unit 224 receives a message, the call control unit 224 performs control of a mobile station apparatus 100 in communication in accordance with the message.

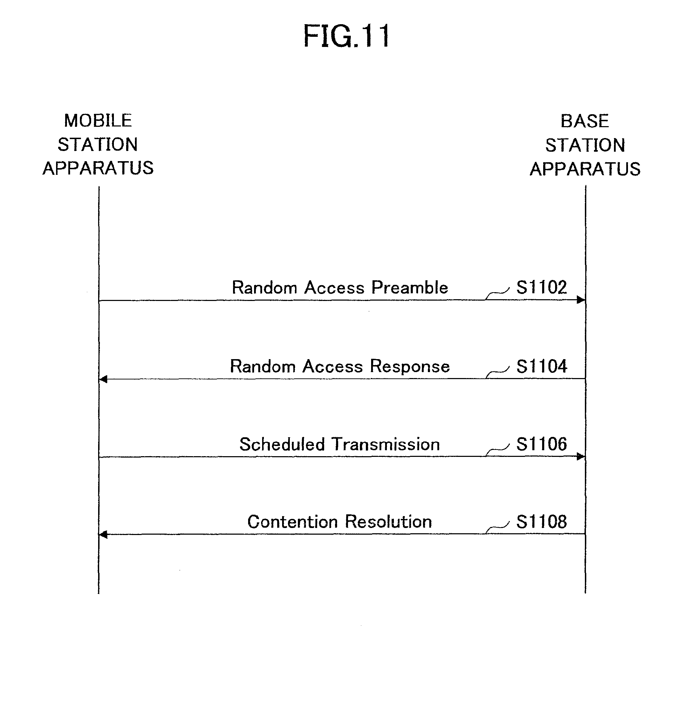

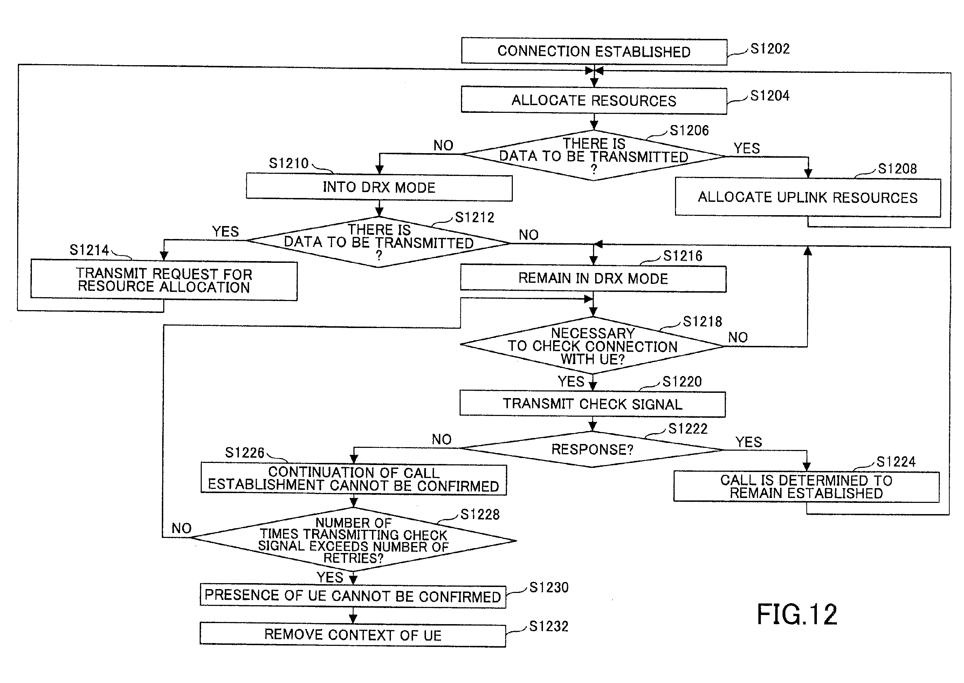

Operation of the mobile communication system according to the present embodiment is explained with reference to FIGs. 11 and 12.

A connection is established when a base station apparatus 200 and a mobile station apparatus 100 perform a random access procedure. The random access procedure is explained next.

The mobile station apparatus 100 transmits a random access preamble to the base station apparatus 200 (Step S1102). The random access preamble may include a random ID.

On receiving the random access preamble from the mobile station apparatus 100, the base station apparatus 200 makes a response by transmitting a random access response (Step S1104). The random access response includes an RA-preamble identifier, timing advance, an initial uplink grant and a temporary C-RNTI (Cell specific-Radio Network Temporary ID). The C-RNTI is an ID used in a RAN for identifying each mobile station apparatus 100. The timing advance is information for adjusting transmission timing.

The mobile station apparatus 100 performs scheduled transmission based on the random access response (Step S1106). The scheduled transmission is made using a shared channel, and includes the C-RNTI of the mobile station apparatus 100.

The base station apparatus 200 transmits a contention resolution to the mobile station apparatus 100 (Step S1108). The contention resolution includes the C-RNTI, an IMSI/TMSI and an uplink grant.

Subsequently, the temporary C-RNTI is changed with a C-RNTI0 of the mobile station apparatus 100.

With this random access procedure, the IMSI, an ID of the tracking area, the C-RNTI and an IP address of the mobile station apparatus 100 are stored in the storage unit 226 of the base station apparatus 200 as resource information.

The following describes a within-range check operation performed on a DRX-mode and/or DTX-mode mobile station apparatus 100 in the mobile communication system of the present embodiment, with reference to FIG. 12.

A connection is established when a mobile station apparatus 100 and a base station apparatus 200 perform a random access procedure (Step S1202).

The base station apparatus 200 allocates wireless resources to the mobile station apparatus 100 (Step S1204).

The DRX/DTX control unit 220 of the base station apparatus 200 determines whether there are data to be transmitted to the mobile station apparatus 100 (Step S1206). The DRX/DTX control unit 220 may determine it, for example, based on a request for resource allocation from the mobile station apparatus 100.

If the DRX/DTX control unit 220 determines that there are data to be transmitted (Step S1206: YES), the base station apparatus 200 allocates uplink resources to the mobile station apparatus 100 (Step S1208). Then, the process returns to Step S1204.

On the other hand, if the DRX/DTX control unit 220 determines that there are no data to be transmitted (Step S1206: NO), the base station apparatus 200 puts the mobile station apparatus 100 in the DRX mode (Step S1210).

The DRX/DTX control unit 220 of the base station apparatus 200 determines, in accordance with the DRX cycle, whether there are data to be transmitted to the mobile station apparatus 100 (Step S1212).

If the DRX/DTX control unit 220 determines that there are data to be transmitted (Step S1212: YES), the base station apparatus 200 allocates uplink resources to the mobile station apparatus 100 in response to a request from the mobile station apparatus 100 for resource allocation (Step S1214). Then, the process returns to Step S1204.

On the other hand, if the DRX/DTX control unit 220 determines that there are no data to be transmitted (Step S1212: NO), the mobile station apparatus 100 remains in the DRX mode (Step S1216).

The DRX/DTX control unit 220 of the base station apparatus 200 determines whether it is necessary to check the connection with the mobile station apparatus 100-in other words, whether to transmit a within-range check signal (Step S1218). For example, if there is no data transmission or reception with the DRX-mode and/or DTX-mode mobile station apparatus 100 after a predetermined time period specified by the within-range check transmission interval has elapsed, the DRX/DTX control unit 220 determines to transmit a within-range check signal to the mobile station apparatus 100.

If the DRX/DTX control unit 220 determines not to transmit a within-range check signal (Step S1218: NO), the process returns to Step S1216. For example, if the predetermined time period has not elapsed, the DRX/DTX control unit 220 determines not to transmit a within-range check signal.

On the other hand, if determining to transmit a within-range check signal (Step S1218: YES), the DRX/DTX control unit 220 directs the downlink control channel generating unit 218 to generate a within-range check signal. Then, the within-range check signal generated by the downlink control channel generating unit 218 is transmitted to the mobile station apparatus 100 via the interfaces 214 and 210, the wireless transmitting and receiving unit 208, the transmission amplifier 206 and the outdoor transmission and reception amplifier 202 (Step S1220). The within-range check signal is transmitted to, for example, a mobile station apparatus 100 with which a connection had been established immediately before the mobile station apparatus 100 entered into the DTX mode.

The DRX/DTX control unit 220 determines whether there is a response to the within-range check signal from the mobile station apparatus 100 (Step S1222).

If there is a response to the within-range check signal (Step S1222: YES), the DRX/DTX control unit 220 of the base station apparatus 200 determines that the mobile station apparatus 100 is present in the coverage area of the base station apparatus 200. In this case, it is determined that the connection remains established (Step S1224), and the process returns to Step S1216.

On the other hand, if there is no response to the within-range check signal (Step S1222: NO), the DRX/DTX control unit 220 of the base station apparatus 200 determines that the continuation of the connection cannot be confirmed (Step S1226). The base station apparatus 200 continues to transmit a within-range check signal to the mobile station apparatus 100.

The DRX/DTX control unit 220 determines whether the number of times transmitting a within-range check signal exceeds a predetermined number of retries (Step S1228). If it does not exceed the number of retries (Step S1228: NO), the process returns to Step S1220. The number of retries is preferably a number of times sufficient to determine that the connection with the mobile station apparatus 100 remains established.

On the other hand, if it exceeds the number of retries (Step S1228: YES), the DRX/DTX control unit 220 determines that the presence of the mobile station apparatus 100 in the coverage area of the base station apparatus 200 cannot be confirmed (Step S1230). The DRX/DTX control unit 220 of the base station apparatus 200 directs the call control unit 224 to remove resource information of the mobile station apparatus 100 from the storage unit 226 (Step S1232). Herewith, it is possible to remove the context of a mobile station apparatus 100 from which a response to a within-range check signal is not received.

The above describes the case in which the base station apparatus 200 transmits a within-range check signal to the mobile station apparatus 100; however, the mobile station apparatus 100 may transmit a within-range report signal to the base station apparatus 200, instead.

In this case, the operation from Step S1218 onward is different, and is therefore explained next.

The DRX/DTX control unit 124 of the mobile station apparatus 100 determines whether to transmit a within-range report signal to the base station apparatus 200 (Step S1218). For example, the DRX/DTX control unit 124 determines to transmit a within-range report signal in the case when the DRX-mode mobile station apparatus 100 performs no data transmission or reception to/from the base station apparatus 200 over a time period specified by a predetermined interval.

If the DRX/DTX control unit 124 determines not to transmit a within-range report signal (Step S1218: NO), the process returns to Step S1216.

On the other hand, if determining to transmit a within-range report signal (Step S1218: YES), the DRX/DTX control unit 124 directs the uplink control channel generating unit 126 to generate a within-range report signal. The within-range report signal generated by the uplink control channel generating unit 126 is transmitted to the base station apparatus 200 via the L1 modem and channel coding unit 118, the front end unit 108, the transmitting unit 110, the power amplifier 114 and the transmitting and receiving duplexer unit 104 (Step S1220). The within-range report signal is transmitted to, for example, a base station apparatus 200 with which a connection had been established immediately before the mobile station apparatus 100 entered into the DRX mode and/or the DTX mode.

The DRX/DTX control unit 124 of the mobile station apparatus 100 determines whether there is a response to the within-range report signal from the base station apparatus 200.

When receiving a response to the within-range report signal (Step S1222: YES), the DRX/DTX control unit 124 of the mobile station apparatus 100 determines that its own presence in the coverage area of the base station apparatus 200 has been successfully reported to the base station apparatus 200. In this case, the base station apparatus 200 determines that the connection remains established (Step S1224). Then, the process returns to Step S1216.

On the other hand, if not receiving a response to the within-range report signal (Step S1222: NO), the DRX/DTX control unit 124 of the mobile station apparatus 100 determines that the continuation of the connection cannot be confirmed (Step S1226). The mobile station apparatus 100 continues to transmit a within-range report signal to the base station apparatus 200.

The DRX/DTX control unit 124 determines whether the number of times transmitting a within-range report signal exceeds a predetermined number of retries (Step S1228). If it does not exceed the number of retries (Step S1228: NO), the process returns to Step S1218. The number of retries is preferably a number of times sufficient to determine that the connection with the base station apparatus 200 remains established.

On the other hand, if it exceeds the number of retries (Step S1228: YES), the DRX/DTX control unit 124 determines that the presence of the mobile station apparatus 100 in the coverage area of the base station apparatus 200 (specifically, a base station apparatus 200 in which the mobile station apparatus 100 had been present immediately before entering into the DRX mode and/or the DTX mode) cannot be confirmed (Step S1230). The DRX/DTX control unit 124 of the mobile station apparatus 100 directs the call control unit 132 to remove resource information of the base station apparatus 200 from the storage unit 134 (Step S1232).

Thus, according to the present embodiment, it is possible to determine whether a DRX-mode and/or DTX-mode mobile station apparatus 100 is present in the coverage area of the base station apparatus 200. (b) Second Embodiment

A mobile communication system including a base station apparatus and a mobile station apparatus according to another embodiment of the present disclosure has the same structure described above with reference to FIG. 8.

Also, the mobile station apparatus 100 and the base station apparatus 200 according to the present embodiment have the same structures described above with reference to FIG. 9 and FIG. 10, respectively.

The mobile communication system according to the present embodiment relates to an embodiment of a within-range check signal transmitted by the base station apparatus 200.

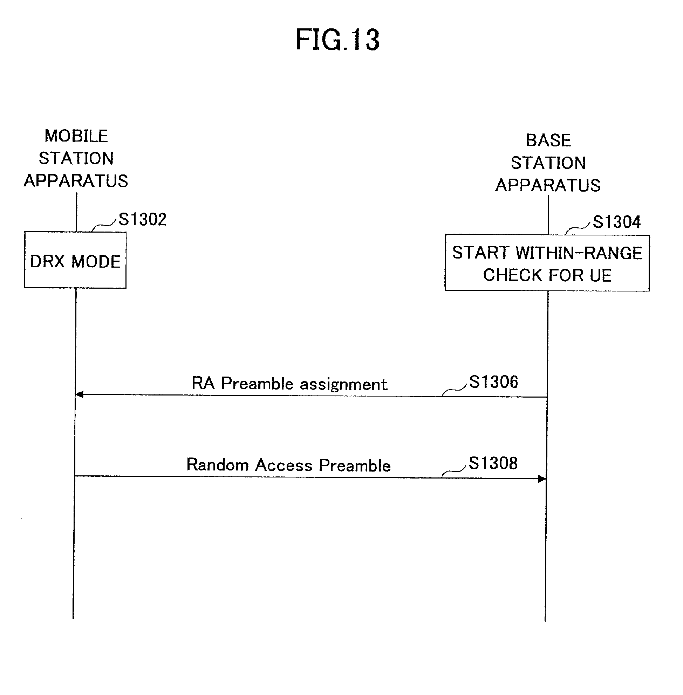

For example, an L1/L2 control channel is applied as a within-range check signal. The L1/L2 control channel may include a random access (RA) preamble assignment. As illustrated in FIG. 13, the mobile station apparatus 100 is in the DRX mode, for example (Step S1302). Then, the base station apparatus 200 starts determining whether the mobile station apparatus 100 is within its coverage area (Step S1304). The base station apparatus 200 determines a predetermined interval by, for example, setting a timer.

If a time period specified by the predetermined interval has elapsed, the base station apparatus 200 transmits a within-range check signal to the mobile station apparatus 100 (Step S1306). The within-range check signal is, for example, an RA preamble assignment.

On receiving a within-range check signal from the base station apparatus 200, the mobile station apparatus 100 transmits a signal in response to the within-range check signal (Step S1308). In the case where a RA preamble assignment, for example, is transmitted from the base station apparatus 200, the mobile station apparatus 100 transmits a random access preamble as a response signal. On receiving the signal in response to the within-range check signal, the base station apparatus 200 determines that the mobile station apparatus 100 is within its coverage area. On the other hand, if there is no response signal from the mobile station apparatus 100, the base station apparatus 200 again transmits a within-range check signal a predetermined number of times. If there is still no response signal from the mobile station apparatus 100, the base station apparatus 200 removes resource information of the mobile station apparatus 100. Herewith, it is possible to remove the context of the mobile station apparatus 100.

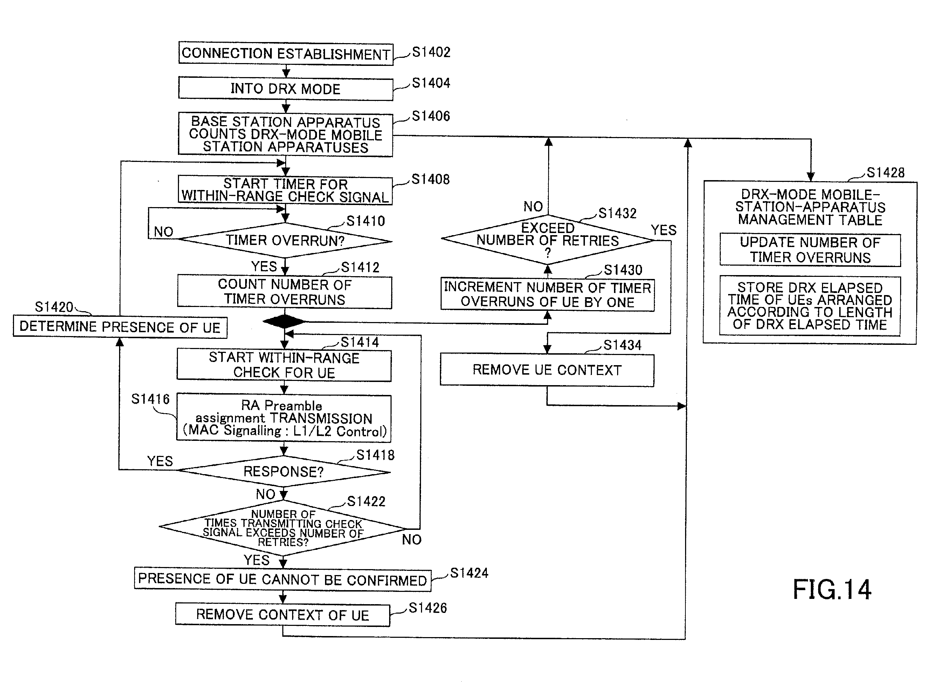

With reference to FIG. 14, the following describes in detail the within-range check operation performed on a DRX-mode mobile station apparatus 100 in the mobile communication system of the present embodiment. The present embodiment describes the within-range check operation for a DRX-mode mobile station apparatus 100; however, the within-range check operation is performed in the same manner for a DTX-mode mobile station apparatus 100.

In the storage unit 226 of the base station apparatus 200, the number of timer overruns and a DRX elapsed time are stored with respect to each DRX-mode mobile station apparatus 100. The DRX elapsed times may be stored in descending order (i.e. from longer to shorter periods). A correspondence table between the number of timer overruns and the DRX elapsed time for each DRX-mode mobile station apparatus 100 is hereinafter referred to as a DRX-mode mobile-station-apparatus management table.

A connection is established when a mobile station apparatus 100 and a base station apparatus 200 perform a random access procedure (Step S1402).

The mobile station apparatus 100 enters into the DRX mode (Step S1404).

The DRX/DTX control unit 220 of the base station apparatus 200 counts, among mobile station apparatuses 100 present in the coverage area of the base station apparatus 200, DRX-mode mobile station apparatuses 100 (Step S1406). The DRX/DTX control unit 220 stores, among the counted DRX-mode mobile station apparatuses 100, newly counted DRX-mode mobile station apparatuses 100 in the DRX-mode mobile-station-apparatus management table.

The DRX/DTX control unit 220 starts a timer for counting a time period specified by a predetermined interval for transmitting a within-range check signal (Step S1408). The within-range check signal is used for checking whether a DRX-mode mobile station apparatus 100 is within the coverage area of the base station apparatus 200. The predetermined interval may be within the range of 1 to 255 ms (for example, 10 ms). The timer is started for each DRX-mode mobile station apparatus 100.

The DRX/DTX control unit 220 determines whether the time period specified by the predetermined interval has elapsed (Step S1410).

If the time has not elapsed (Step S1410: NO), the process returns to Step S1410. On the other hand, if the time has elapsed (Step S1410: YES), the DRX/DTX control unit 220 counts the number of timer overruns, which indicates the number of times that the time for transmitting a within-range check signal has elapsed (Step S1412).

The DRX/DTX control unit 220 determines to start a within-range check of a mobile station apparatus 100 for which the time of transmitting a within-range check signal has elapsed (Step S1414).

The DRX/DTX control unit 220 directs the downlink control channel generating unit 218 to generate a RA preamble assignment (Step S1416). A RA preamble assignment is transmitted from the base station apparatus 200.

The DRX/DTX control unit 220 determines whether a response to the RA preamble assignment is received from the mobile station apparatus 100 (Step S1418).

If a response to the RA preamble assignment is received from the mobile station apparatus 100 (Step S1418: YES), the DRX/DTX control unit 220 determines that the mobile station apparatus 100 is within the coverage area of the base station apparatus 200 (Step S1420). Then, the process returns to Step S1408.

On the other hand, if a response to the RA preamble assignment is not received from the mobile station apparatus 100 (Step S1418: NO), the DRX/DTX control unit 220 determines whether the number of times transmitting a within-range check signal exceeds a predetermined number of retries (Step S1422). The predetermined number of retries may be within the range of 1 to 255 (for example, 5). The predetermined number of retries may be reported by the base station apparatus 200. For example, after a call is established between a mobile station apparatus 100 and a base station apparatus 200, the predetermined number of retries is reported to the mobile station apparatus 100 when not in the DRX mode and/or the DTX mode.

If the number of times transmitting a within-range check signal does not exceed the predetermined number of retries (Step S1422: NO), the process returns to Step S1414. On the other hand, if it exceeds the predetermined number of retries (Step S1422: YES), the DRX/DTX control unit 220 determines that the presence of the mobile station apparatus 100 in the coverage area of the base station apparatus 200 cannot be confirmed (Step S1424) Subsequently, the DRX/DTX control unit 220 directs the call control unit 224 to remove resource information of the mobile station apparatus 100 from the storage unit 226 (Step S1426). Herewith, it is possible to remove the context of a mobile station apparatus 100 from which a response to a within-range check signal is not received.

The DRX/DTX control unit 220 directs the call control unit 224 to update the DRX-mode mobile-station-apparatus management table stored in the storage unit 226 (Step S1428). For example, the DRX/DTX control unit 220 directs to remove, from the DRX-mode mobile-station-apparatus management table, one or more mobile station apparatuses 100 whose context has been removed. Then, the call control unit 224 removes such mobile station apparatuses 100 in accordance with the direction of the DRX/DTX control unit 220.

If the number of timer overruns is counted in Step S1412, the number of timer overruns of a corresponding mobile station apparatus 100 is incremented by one (Step S1430).

The DRX/DTX control unit 220 determines whether the incremented number of timer overruns exceeds the predetermined number of retries (Step S1432).

When it does not exceed the number of retries (Step S1432: NO), the process returns to Step S1428. In this case, in the DRX-mode mobile-station-apparatus management table, the number of timer overruns and the DRX elapsed time for the mobile station apparatus 100 are updated.

On the other hand, if it exceeds the predetermined number of retries (Step S1432: YES), the DRX/DTX control unit 220 directs the call control unit 224 to remove resource information of the mobile station apparatus 100 from the storage unit 226 (Step S1434). Herewith, it is possible to remove the context of a mobile station apparatus 100 from which a response to a within-range check signal is not received.

The DRX/DTX control unit 220 directs the call control unit 224 to update the DRX-mode mobile-station-apparatus management table stored in the storage unit 226 (Step S1428). For example, the DRX/DTX control unit 220 directs to remove, from the DRX-mode mobile-station-apparatus management table, one or more mobile station apparatuses 100 whose context has been removed. Then, the call control unit 224 removes such mobile station apparatuses 100 in accordance with the direction of the DRX/DTX control unit 220.

### (c) Third Embodiment

A mobile communication system including a base station apparatus and a mobile station apparatus 100 according to another embodiment of the present disclosure has the same structure described above with reference to FIG. 8.

Also, the mobile station apparatus 100 and the base station apparatus 200 according to the present embodiment have the same structures described above with reference to FIG. 9 and FIG. 10, respectively.

The mobile communication system according to the present embodiment relates to an embodiment of a within-range report signal transmitted by the mobile station apparatus 100.

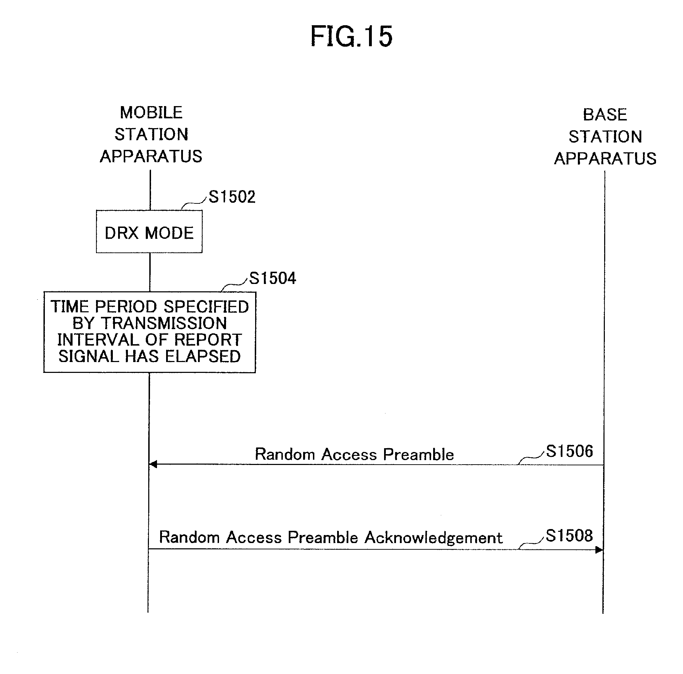

For example, a random access channel (RACH) is applied as a within-range report signal. The random access channel may include a random access preamble. As illustrated in FIG. 15, the mobile station apparatus 100 is in the DRX mode, for example (Step S1502). Then, the mobile station apparatus 100 starts a timer used to determine whether to transmit a within-range report signal. After starting the timer, the mobile station apparatus 100 determines whether a time period specified by a predetermined interval for transmitting a within-range report signal has elapsed (Step S1504).

If the time period has elapsed, the mobile station apparatus 100 transmits a within-range report signal to the base station apparatus 200 (Step S1506). The within-range report signal is, for example, a random access preamble.

On receiving a within-range report signal from the mobile station apparatus 100, the base station apparatus 200 transmits a signal in response to the within-range response signal (Step S1508). If a random access preamble, for example, is transmitted from the mobile station apparatus 100, the base station apparatus 200 transmits a random access preamble acknowledgement as a response signal.

If receiving a signal in response to the within-range report signal, the mobile station apparatus 100 determines that its own presence in the coverage area of the base station apparatus 200 has been successfully reported to the base station apparatus 200. The base station apparatus 200 is also able to determine that the mobile station apparatus 100 remains within its coverage area.

In the case where the mobile station apparatus 100 does not receive a signal in response to the within-range report signal, two cases are conceivable.

The first case is that, although the base station apparatus 200 has received a within-range report signal and transmitted a response signal, the mobile station apparatus 100 fails to receive the response signal. In such a case, the mobile station apparatus 100 retransmits a within-range report signal, whereby the mobile station apparatus 100 may be able to receive a signal in response to the retransmitted within-range report signal. If not receiving a response signal even after transmitting a within-range report signal the predetermined number of retries, the mobile station apparatus 100 determines that it is outside the coverage area of the base station apparatus 200. The mobile station apparatus 100 removes resource information of the base station apparatus 200. Herewith, it is possible to remove the context of the base station apparatus 200 stored in the mobile station apparatus 100.

The second case is that, because the mobile station apparatus 100 has been outside the coverage area of the base station apparatus 200, the base station apparatus 200 does not receive within-range report signals transmitted from the mobile station apparatus 100. In this case, since having the function described in the first and the second embodiments above, the base station apparatus 200 is able to determine that the mobile station apparatus 100 has moved out of its coverage area. The base station apparatus 200 may be structured to transmit a within-range check signal, for example.

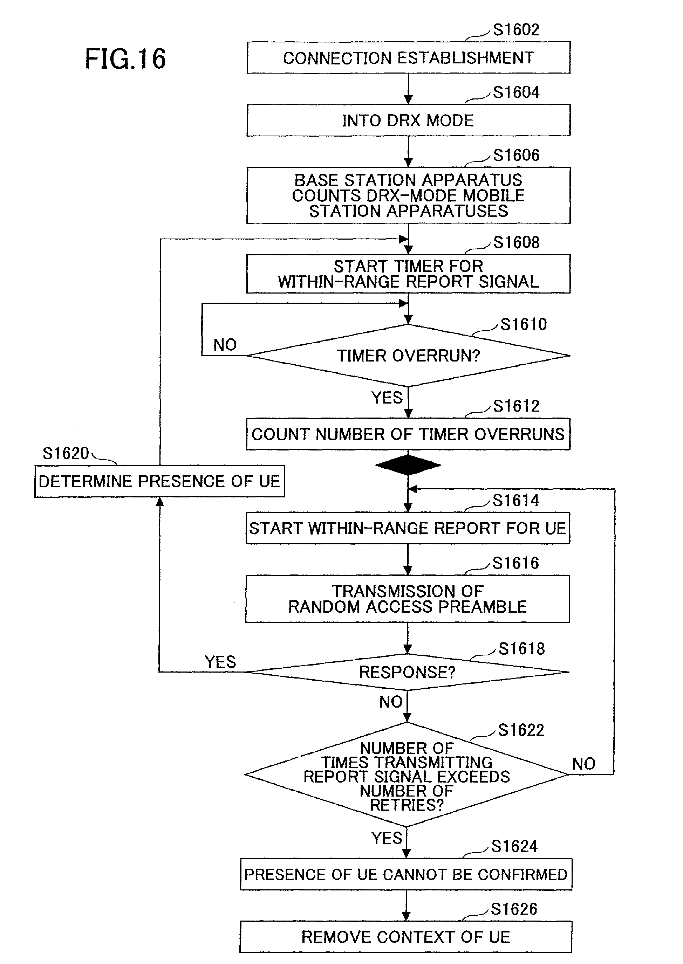

With reference to FIG. 16, the following describes the within-range report operation performed when a DRX-mode mobile station apparatus 100 transmits a within-range report signal to a base station apparatus 200 in the mobile communication system of the present embodiment. The present embodiment describes the within-range report operation for a DRX-mode mobile station apparatus 100; however, the within-range report operation is performed in the same manner for a DTX-mode mobile station apparatus 100.

In the storage unit 226 of the base station apparatus 200, the number of timer overruns and a DRX elapsed time are stored with respect to each DRX-mode mobile station apparatus 100. The DRX elapsed times may be stored in descending order (i.e. from longer to shorter periods). A correspondence table between the number of timer overruns and the DRX elapsed time for each DRX-mode mobile station apparatus 100 is referred to as a DRX-mode mobile-station-apparatus management table.

A connection is established when a mobile station apparatus 100 and a base station apparatus 200 perform a random access procedure (Step S1602).

The mobile station apparatus 100 enters into the DRX mode (Step S1604).

The DRX/DTX control unit 220 of the base station apparatus 200 counts, among mobile station apparatuses 100 present in the coverage area of the base station apparatus 200, DRX-mode mobile station apparatuses 100 (Step S1606). The DRX/DTX control unit 220 stores, among the counted DRX-mode mobile station apparatuses 100, newly counted DRX-mode mobile station apparatuses 100 in the DRX-mode mobile-station-apparatus management table.

The DRX/DTX control unit 124 of the mobile station apparatus 100 starts a timer for counting a time period specified by a predetermined interval for transmitting a within-range report signal (Step S1608). The within-range report signal is used for reporting that the mobile station apparatus 100 is present in the coverage area of the base station apparatus 200. The predetermined interval may be supplied by the base station apparatus 200. The predetermined cycle may be within the range of 1 to 255 ms (for example, 10 ms). The timer is started for each DRX- mode mobile station apparatus. The base station apparatus 200 may notify each mobile station apparatus 100 of the predetermined interval-i.e. the predetermined interval may be different for each mobile station apparatus 100. For example, the predetermined interval may be determined based on a type or the performance of the mobile station apparatus 100.

The DRX/DTX control unit 124 determines whether the time period specified by the predetermined interval has elapsed (Step S1610).

If the time has not elapsed (Step S1610: NO), the process returns to Step S1610. On the other hand, if the time has elapsed (Step S1610: YES), the DRX/DTX control unit 124 counts the number of timer overruns, which indicates the number of times that the time for transmitting a within-range report signal has elapsed (Step S1612).

The DRX/DTX control unit 124 determines to start transmitting a within-range report signal (Step S1614).

The DRX/DTX control unit 124 directs the uplink control channel generating unit 126 to generate a random access preamble (Step S1616). A random access preamble is transmitted from the mobile station apparatus 100.

The DRX/DTX control unit 124 determines whether a response to the random access preamble is received from the base station apparatus 200 (Step S1618).

If a response to the random access preamble is received from the base station apparatus 200 (Step S1618: YES), the DRX/DTX control unit 124 determines that its own presence in the coverage area of the base station apparatus 200 has been successfully reported to the base station apparatus 200 (Step S1620). Then, the process returns to Step S1608.

On the other hand, if a response to the random access preamble is not received from the base station apparatus 200 (Step S1618: NO), the DRX/DTX control unit 124 determines whether the number of times transmitting a within-range report signal exceeds a predetermined number of retries (Step S1622). The predetermined number of retries may be within the range of 1 to 255 (for example, 5). The predetermined number of retries may be supplied by the base station apparatus 200. For example, after a connection is established between a mobile station apparatus 100 and a base station apparatus 200, the predetermined number of retries is supplied to the mobile station apparatus 100 when not in the DRX mode and/or the DTX mode.

If the number of times transmitting a within-range report signal does not exceed the predetermined number of retries (Step S1622: NO), the process returns to Step S1614. On the other hand, if it exceeds the predetermined number of retries (Step S1622: YES), the DRX/DTX control unit 124 determines that its own presence within the coverage area of the base station apparatus 200 has not been reported to the base station apparatus 200 (Step S1624).

The DRX/DTX control unit 124 directs the call control unit 132 to remove resource information of the base station apparatus 200 from the storage unit 134 (Step S1626). Herewith, it is possible to remove the context of a base station apparatus 200 from which a response to a within-range report signal is not received.

Subsequently, the processes explained in the first and the second embodiments above may be carried out, whereby it is possible to remove the context of a mobile station apparatus 100 from which a response to a within-range report signal is not received.

According to the embodiments described above, a base station apparatus in a next-generation mobile communication system is capable of monitoring whether a mobile station apparatus in the DRX mode and/or the DTX mode is within its coverage area. Therefore, in the case where the mobile station apparatus appears not to be in the coverage area of the base station apparatus due to quasi-normal and/or abnormal operations, the base station apparatus is able to detect the presence or absence of the mobile station apparatus. Also, in the case when the DRX-mode mobile station apparatus has moved out of the coverage area of the base station apparatus, the base station apparatus is able to detect the absence of the mobile station apparatus. If the mobile station apparatus in the DRX mode and/or the DTX mode has been absent from the coverage area, the base station apparatus is able to release resources allocated to the mobile station apparatus since the established connection is no longer necessary. For example, the base station apparatus may delete ancillary information of a mobile station apparatus which has moved out of the coverage area in an unintended manner. In addition, the processing work load of the base station apparatus can be reduced. For example, unnecessary buffers can be released due to a reduction in the number of mobile station apparatuses whose information the base station apparatus needs to manage. Herewith, it is possible to prevent the amount of memory to be provided in the base station apparatus from becoming too large.

For example, as an LTE system requirement, it is necessary to support contexts of hundreds of users in one sector. Supporting contexts includes managing and/or holding the contexts. It is necessary to support contexts of 400 users in a bandwidth of 20 MHz, for example. In this case, although the capacity of the system is influenced by customers and data traffic of a region in which the service operates, it is physically impossible to provide simultaneous access of 400 users (mobile station apparatuses) per second because there is a limit in the number of resource blocks. Accordingly, most of the mobile station apparatuses are considered to enter into the non-active mode or the DRX mode. In such a condition, if it is possible to release unnecessary resources allocated to DRX-mode mobile station apparatuses which are absent from the coverage area of the base station apparatus due to, for example, having moved out of the coverage area, the amount of memory to be provided in the base station apparatus is expected to be dramatically reduced in a development stage of the mobile communication system.

According to a base station apparatus, a mobile station apparatus, a mobile communication system and a within-range check method disclosed herein, it is possible to detect the presence of a mobile station apparatus in the discontinuous reception mode and/or the discontinuous transmission mode.

In addition, according to a base station apparatus, a mobile station apparatus, a mobile communication system and a within-range check method disclosed herein, it is possible to release wireless resources of a mobile station apparatus if the mobile station apparatus moves out of the coverage area of a corresponding base station apparatus while being in the discontinuous reception mode and/or the discontinuous transmission mode.

All examples and conditional language used herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiment of the present invention has been described in detail, it should be understood that various changes, substitutions, and alterations could be made hereto without departing from the spirit and scope of the invention.

## Claims

1. A base station apparatus used in a mobile communication system in which data are transmitted and received using shared channels, the base station apparatus comprising:
a signal generating unit configured to generate a within-range check signal used to determine, after a mobile station apparatus present in a coverage area of the base station apparatus has entered into a discontinuous reception mode and/or a discontinuous transmission mode, whether the mobile station apparatus is present in the coverage area;
a signal transmission control unit configured to control transmission of the within-range check signal so that the within-range check signal is transmitted to the mobile station apparatus upon a passage of a predetermined transmission time while the mobile station apparatus remains in the discontinuous reception mode and/or the discontinuous transmission mode; and
a determining unit configured to determine the presence of the mobile station apparatus in the coverage area if a response to the within-range check signal is returned, and determine absence of the mobile station apparatus from the coverage area if no response to the within-range check signal is returned.

2. The base station apparatus as claimed in claim 1 further comprising a resource managing unit configured to manage allocation of a resource to the mobile station apparatus, and to release the resource allocated to the mobile station apparatus in a case where the determining unit determines the absence of the mobile station apparatus from the coverage area.

3. The base station apparatus as claimed in claim 2, wherein the resource managing unit retains the resource allocation in a case where the determining unit determines the presence of the mobile station apparatus in the coverage area.

4. The base station apparatus as claimed in claim 1, wherein the signal transmission control unit determines a transmission time of the within-range check signal with respect to each mobile station apparatus.

5. The base station apparatus as claimed in claim 1, wherein the within-range check signal includes an L1/L2 control channel.

6. The base station apparatus as claimed in claim 2 wherein the within-range check signal transmitted to the mobile station apparatus includes an L1/L2 control channel and an assignment of a random access preamble, the determining unit determines the absence of the mobile station apparatus from the coverage area if the random access preamble is not returned from the mobile station apparatus, and the resource managing unit releases the resource allocation if the determining unit determines the absence of the mobile station apparatus from the coverage area.

7. A base station apparatus used in a mobile communication system in which data are transmitted and received between the base station apparatus and a mobile station apparatus using shared channels, the base station apparatus comprising:
a determining unit configured to determine, in a case of receiving a within-range report signal from the mobile station apparatus in a discontinuous reception mode and/or a discontinuous transmission mode, presence of the mobile station apparatus in a coverage area of the base station apparatus;
a response signal generating unit configured to generate a response signal in response to the within-range report signal; and
a response signal transmission control unit configured to control transmission of the response signal.

8. The base station apparatus as claimed in claim 7 further comprising:
a check signal generating unit configured to generate a within-range check signal used to determine, after the mobile station apparatus present in the coverage area has entered into the discontinuous reception mode and/or the discontinuous transmission mode, whether the mobile station apparatus is present in the coverage area; and
a check signal transmission control unit configured to control transmission of the within-range check signal so that the within-range check signal is transmitted to the mobile station apparatus upon a passage of a predetermined transmission time while the mobile station apparatus remains in the discontinuous reception mode and/or the discontinuous transmission mode,
wherein the determining unit determines the presence of the mobile station apparatus in the coverage area if a response to the within-range check signal is returned, and determines absence of the mobile station apparatus from the coverage area if no response to the within-range check signal is returned.

9. The base station apparatus as claimed in claim 7 or 8 further comprising a resource managing unit configured to retain a resource allocated to the mobile station apparatus if the determining unit determines the presence of the mobile station apparatus in the coverage area.

10. The base station apparatus as claimed in claim 9, wherein the resource managing unit retains the resource in a case where the determining unit determines the presence of the mobile station apparatus in the coverage area.

11. The base station apparatus as claimed in claim 7 further comprising a signal transmission time determining unit configured to determine a transmission time of the within-range report signal for the mobile station apparatus in the discontinuous reception mode and/or the discontinuous transmission mode, and supply the transmission time to the mobile station apparatus.

12. A mobile station apparatus used in a mobile communication system in which data are transmitted and received between the mobile station apparatus and a base station apparatus using shared channels after a connection is established, the mobile station apparatus comprising:
a report signal generating unit configured to generate a within-range report signal indicating presence of the mobile station apparatus in a coverage area of the base station apparatus; and
a report signal transmission control unit configured to control transmission of the within-range report signal to transmit the within-range report signal to the base station apparatus at a predetermined interval while the mobile station apparatus is in a discontinuous reception mode and/or a discontinuous transmission mode.

13. The mobile station apparatus as claimed in claim 12 or the base station apparatus as claimed in claim 7, wherein the within-range report signal includes a random access channel.

14. The mobile station apparatus as claimed in claim 13, wherein the within-range report signal includes a random access preamble to receive a random access preamble acknowledgement from the base station apparatus as a response to the random access preamble.

15. A mobile communication system in which data are transmitted and received using shared channels, the mobile communication system comprising:
a mobile station apparatus; and
a base station apparatus,
wherein the base station apparatus includes:
a signal generating unit configured to generate a within-range check signal used to determine, after the mobile station apparatus present in a coverage area of the base station apparatus has entered into a discontinuous reception mode and/or a discontinuous transmission mode, whether the mobile station apparatus is present in the coverage area;
a signal transmission control unit configured to control transmission of the within-range check signal so that the within-range check signal is transmitted to the mobile station apparatus upon a passage of a predetermined transmission time while the mobile station apparatus remains in the discontinuous reception mode and/or the discontinuous transmission mode; and
a determining unit configured to determine the presence of the mobile station apparatus in the coverage area if a response to the within-range check signal is returned, and determine absence of the mobile station apparatus from the coverage area if no response to the within-range check signal is returned.

16. A mobile communication system in which data are transmitted and received using shared channels, the mobile communication system comprising:
a mobile station apparatus; and
a base station apparatus;
wherein the mobile station apparatus includes,
a report signal generating unit configured to generate a within-range report signal indicating presence of the mobile station apparatus in a coverage area of the base station apparatus; and
a report signal transmission control unit configured to control transmission of the within-range report signal to transmit the within-range report signal to the base station apparatus at a predetermined interval, and
the base station apparatus includes
a determining unit configured to determine, in a case of receiving the within-range report signal from the mobile station apparatus in a discontinuous reception mode and/or a discontinuous transmission mode, the presence of the mobile station apparatus in the coverage area;
a response signal generating unit configured to generate a response signal in response to the within-range report signal; and
a response signal transmission control unit configured to control transmission of the response signal.

17. A within-range check method used in a mobile communication system in which data are transmitted and received between a mobile station apparatus and a base station apparatus using shared channels, the within-range check method causing the base station apparatus to execute the steps of:
generating a within-range check signal used to determine, after a mobile station apparatus present in a coverage area of the base station apparatus has entered into a discontinuous reception mode and/or a discontinuous transmission mode, whether the mobile station apparatus is present in the coverage area;
controlling transmission of the within-range check signal so that the within-range check signal is transmitted to the mobile station apparatus upon a passage of a predetermined transmission time while the mobile station apparatus remains in the discontinuous reception mode and/or the discontinuous transmission mode; and
determining the presence of the mobile station apparatus in the coverage area if a response to the within-range check signal is returned, and determining absence of the mobile station apparatus from the coverage area if no response to the within-range check signal is returned.

18. A within-range check method used in a mobile communication system in which data are transmitted and received between a mobile station apparatus and a base station apparatus using shared channels, the within-range check method comprising the steps of:
causing the mobile station apparatus to generate a within-range report signal indicating presence of the mobile station apparatus in a coverage area of the base station apparatus;
causing the mobile station apparatus to transmit the within-range report signal to the base station apparatus at a predetermined interval while the mobile station apparatus is in a discontinuous reception mode and/or a discontinuous transmission mode;
causing the base station apparatus to determine, in a case of receiving the within-range report signal from the mobile station apparatus in the discontinuous reception mode and/or the discontinuous transmission mode, the presence of the mobile station apparatus in the coverage area;
causing the base station apparatus to generate a response signal in response to the within-range report signal; and
causing the base station apparatus to transmit the response signal to the mobile station apparatus.
